# EUROPEAN PATENT SPECIFICATION

(11) **EP 2 329 689 B1**
(45) Date of publication and mention of the grant of the patent: **15.02.2017**
(21) Application number: 08807140.2
(22) Date of filing: 22.09.2008
(51) Int. Cl.: H05B 39/04

(54) **AN ARRANGEMENT FOR CONTROLLING IGNITION IN ELECTRONIC TRANSFORMERS AND CORRESPONDING METHOD**
ANORDNUNG ZUR STEUERUNG DER ZÜNDUNG IN ELEKTRONISCHEN TRANSFORMATOREN UND ENTSPRECHENDES VERFAHREN
AGENCEMENT DE COMMANDE D'ALLUMAGE DANS DES TRANSFORMATEURS ÉLECTRONIQUE ET PROCÉDÉ ASSOCIE

(43) Date of publication of application: 08.06.2011
(73) Proprietor: OSRAM GmbH, 80807 München (DE); OSRAM S.P.A. - SOCIETA' RIUNITE OSRAM EDISON CLERICI, 20126 Milano (IT)
(72) Inventor: FACCIN, Marco, I-31031 Caerano San Marco (IT)
(74) Representative: Bosotti, Luciano
(86) International application number: PCT/IB2008/002480
(87) International publication number: WO 2010/032076

(56) References cited:
- EP-A- 0 264 765
- EP-A- 1 608 207
- DE-A1- 10 160 790
- US-A- 5 144 202
- US-A1- 2002 071 299

## Description

### Field of the invention

This disclosure relates to controlling ignition in electronic transformers.

This disclosure was devised with specific attention paid to its possible use in controlling ignition in electronic transformers for low voltage lamps such a halogen lamps.

### Description of the related art

Electronic transformers for low voltage lamps typically comprise an auto-oscillating half bridge that needs to be re-ignited after every zero crossing of the mains voltage.

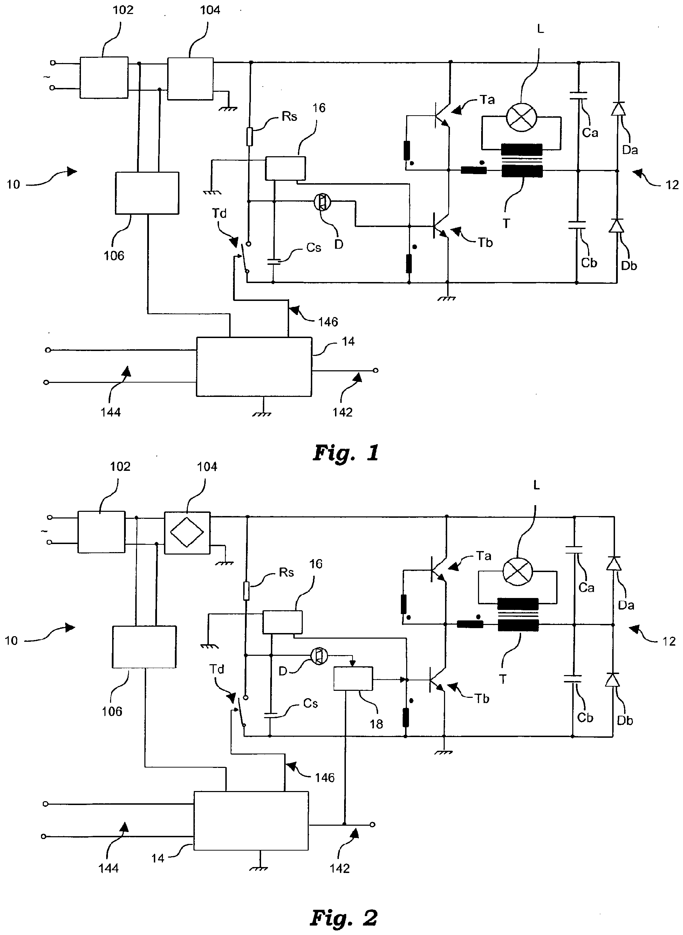

Figure 1 is a block diagram exemplary of such an arrangement. In the block diagram of figure 1, reference 10 denotes as a whole an input stage including a line filter 102 to be connected to the mains voltage. The output from the filter 102 feeds a bridge rectifier 104 and is also sensed by a zero crossing detector 106 to detect the zero crossings of the mains voltage.

A load such as a lamp L (e.g. a halogen lamp) is fed via the secondary winding of a transformer T whose primary winding is driven by a switching output stage 12 including half-bridge arrangement with two diodes Da, Db and two capacitors Ca, Cb. Two electronic switches such as two bipolar transistors (BJTs) Ta, Tb (having associated ancillary components such as bias resistors and the like) are alternatively switched on and off as a function of a driving signal provided e.g. by a diac D, which is connected to the intermediate point of a RC network interposed between the output voltage of the bridge rectifier 106 and ground. A resistor Rs and a capacitor Cs constitute the upper branch and the lower branch of the RC network, respectively. The charge on the capacitor Cs thus dictates (e.g., by igniting the diac D) switching of the transistors Ta, and Tb.

The output from the zero crossing detector 106 is sent to a microcontroller 14 fed with a voltage supply 142 and adapted to receive over an input line 144 a digital brightness control to provide a dimming action of the lamp L by selectively acting, via a line 146, on a switch Td connected in parallel to the capacitor Cs, so that, when closed, the switch Td short-circuits the capacitor Cs.

In the exemplary arrangement of figure 1, the ignition capacitor Cs is thus charged by the rectified voltage coming from the bridge rectifier 104. In such an arrangement, after some hundreds of µs, the voltage across Cs will reach the threshold of the diac D (e.g. 32 V) and be discharged through the driving network of the low power BJT Tb of the half bridge with consequent ignition. Once this happens, the capacitor Cs is kept discharged during the normal operation of the half bridge in order to avoid unwanted re-ignitions. This may be effected by means of a diac stop circuit 16 acting between the diac D and ground.

The switch Td arranged in parallel to the capacitor Cs (which delays the ignition of the diac D after every zero crossing of the mains) makes it possible to regulate the output Vrms voltage applied to the lamp(s) L. This solution can be easily used in a ballast where the microcontroller 14 receives digital commands over the line 144 from an external controller and drives the switch Td (in a synchronized manner with the zero crossings of the mains as detected by the zero crossing detector 106) in order to achieve the desired value of brightness.

The switch Td also makes it possible to shut-down the device as a whole (stand-by condition) when the switch Td is permanently kept closed (i.e. with the ignition capacitor Cs short-circuited). In the case of stand-by operation (i.e. with the switch Td closed) a DC voltage e.g. 1.41 times greater than the Vrms AC (50-60 Hz) mains voltage may appear after the bridge rectifier 104. Power will thus be dissipated through Rs.

In fact, selecting a value for Cs lower than 5 nF will make it difficult to ignite correctly the half-bridge, and with medium/high power ballasts, a value of Cs of least of 10 nF will be almost unavoidable in an arrangement as shown in figure 1. In order to avoid too long a delay in charging Cs through Rs and adversely affecting the EMI behaviour in terms of mains harmonics (as requested in order to comply with standards such as EN6100-3-2) a typical value of Rs will have to be smaller than 300 KOhm.

Assuming a maximum nominal mains voltage of 254 Vrms, the power dissipated by Rs when the device is at stand-by will not be smaller than approximately 0.4 W when Rs = 300 KOhm. In the presence of a microcontroller such as 14 and other ancillary components to be supplied also during stand-by, an arrangement as shown in figure 1 will easily exhibit a stand-by consumption is excess of 0.5 W. This is hardly compatible with current and future standards aiming at reducing power absorption by electrical devices such as lighting appliances.

An arrangement aiming at reducing power absorption in a circuit as illustrated in figure 1 is disclosed in WO2009/115856. In that arrangement, the connection between Rs and Cs is interrupted when stand-by operation is required, so that no current can flow through Rs and power consumption is totally eliminated.

EP0264765 discloses a circuit for driving a load from a mains signal according to the preamble of claims 1 and 10.

### Object and summary of the invention

While the arrangement in question is satisfactory for a wide range of applications, the need is felt for alternative arrangements which may occupy less space and be less expensive to produce.

The object of the invention is to provide a satisfactory response to that need.

According to the present invention, such an object is achieved by means of a circuit having the features set forth in claim 1 that follows. The invention also relates to a method according to claim 11. The claims are an integral part of the disclosure of the invention provided herein.

In an embodiment, the arrangement described herein reduces the power consumption in stand-by condition by using the supply voltage necessary to maintain active the logic inside the ballast.

### Brief description of the annexed representations

The invention will now be described, by way of example only, with reference to the enclosed representations, wherein:
- figure 1 has already been described in the foregoing,
- figure 2 is representative of a first embodiment of the arrangement described herein, and
- figures 3 to 6 are representative of further embodiments of the arrangement described herein.

### Detailed description of preferred embodiments

In the following description, numerous specific details are given to provide a thorough understanding of embodiments. The embodiments can be practiced without one or more of the specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

The various embodiments described herein will be presented with reference to the same exemplary circuit layout already described in connection with figure 1. Consequently, such a circuit layout will not be described again, being it otherwise understood that parts or elements identical or equivalent to parts or elements already described in connection with figure 1 will be designated with the same reference symbols throughout figures 2 to 6.

Also, those of skill in the art will promptly appreciate that the scope of this disclosure is in no way limited to the specific exemplary circuit layout introduced in connection with figure 1, but extends to any layout based on the same operating principle, i.e. an auto-oscillating half bridge re-ignited via a RC network such as the RC network of figure 1, including a resistor Rs and a capacitor Cs, or, more generally, to any circuit for driving a load L from a mains signal and comprising:
- an ignition capacitor such as Cs,
- an input stage for loading said ignition capacitor from said mains signal, and
- a switching output stage (e.g. a half-bridge arrangement) for driving said load, said output stage switcheable as a function of the charge loaded on said ignition capacitor.

In that respect, it will be appreciated that e.g. the switch Td (and the diac D as well) do in no way represent mandatory features of the arrangement described herein.

The embodiments described herein exploit the possibility of reducing power absorption at standby by increasing the value of the resistor Rs. The level of power absorption at standby is in fact an inverse function of the value of the resistor Rs. For instance, having a value of Rs greater than 1 Mohm makes it possible to achieve a dissipated power value of, approximately, 0.1 W.

On the other hand, in an embodiment ensuring that the device as a whole fulfils the harmonics requirement as set by standards such as EN 6100-3-2, with a value of Rs greater than 1 Mohm, the capacitor Cs will have a value of, approximately, 1 nF (i.e. in the range of one nF unit, in contrast with the values in the range of several nF, e.g. 5 nF - 10 nF, of conventional arrangements as shown in figure 1).

In order to ensure reliable ignition of the half-bridge after the zero crossing of the mains, the embodiments described herein include a charge amplifier block 18 interposed between the capacitor Cs and the switches Ta, Tb. Specifically, in the embodiments illustrated, the block 18 is interposed between the diac D and the the base of the BJT Tb and is supplied by the same Vcc voltage 142 which supplies the microcontroller 14.

The block 18 is able to "enlarge" (i.e. to amplify) the signal from the diac D thus ensuring reliable ignition of the half-bridge after the zero crossings of the mains even if the amount of charge collected on the capacitor Cs is reduced as a result of the capacitance value of Cs being reduced.

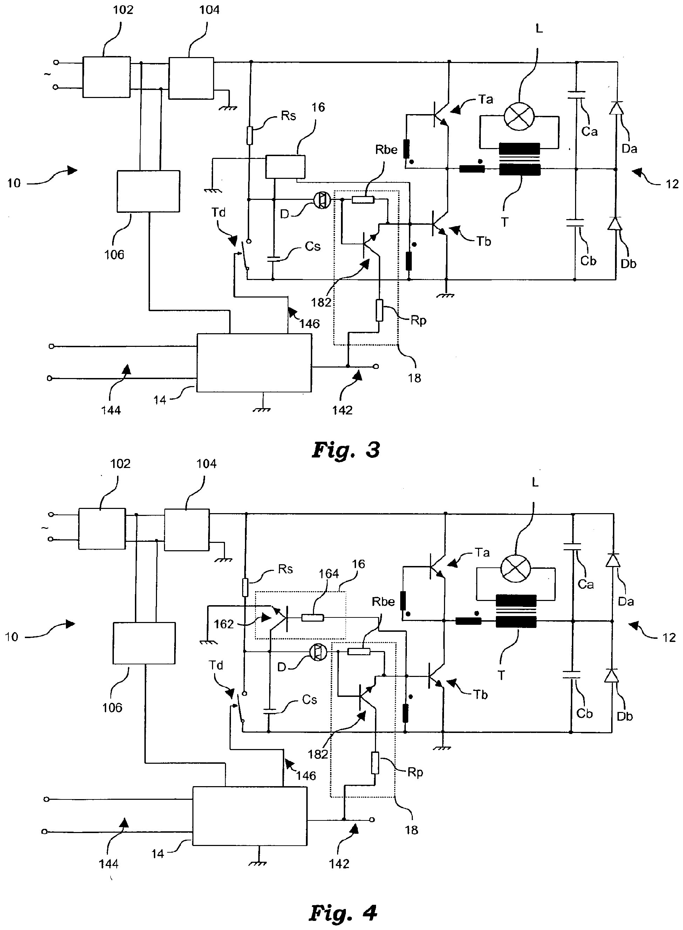

Figures 3 to 6 are representative of an exemplary embodiment of the charge amplifier 18, including a bipolar transistor (BJT) 182 in an emitter-follower configuration. The transistor 182 has its base connected to the diac D and its emitter driving the switches Ta, Tb. A resistor Rbe is interposed between the base and the emitter and a pull up resistor Rp is interposed between the collector of the transistor 182 and the voltage supply 142.

The transistor 182 amplifies the signal from the diac D by drawing additional charge from the supply voltage 142 via the pull-up resistor Rp. The resistor Rbe between base and emitter avoids that the base of the transistor 182 may remain "floating" when the diac D does not ignite.

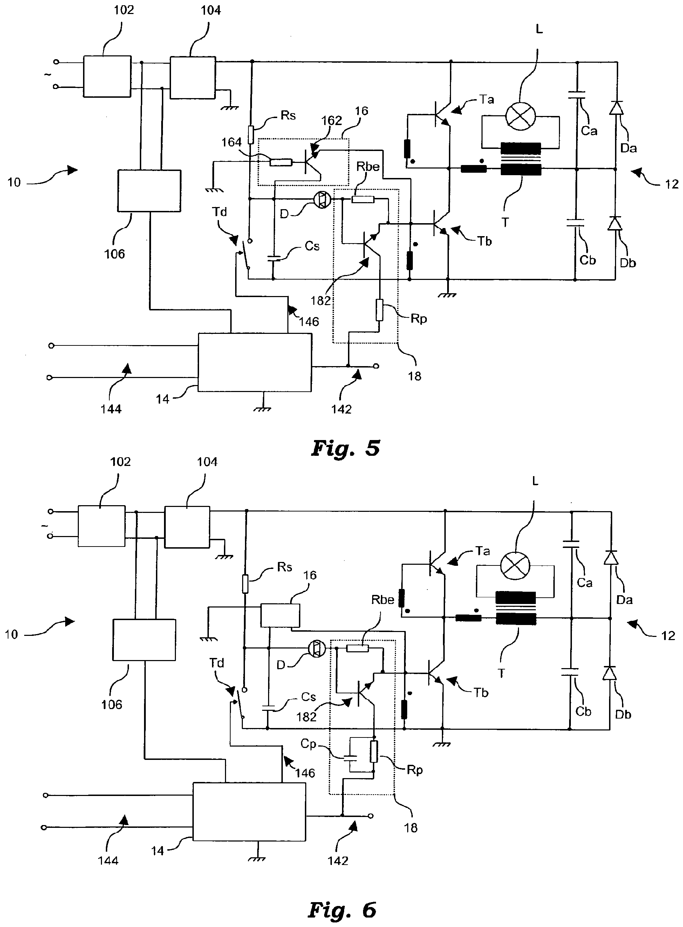

In the exemplary embodiment of figure 6 a capacitor Cp is arranged in parallel to the pull-up resistor Rp to improve ignition of the power BJT Tb.

Figures 4 and 5 detail two possible embodiments of the diac stop circuit 16.

In the embodiment of figure 4, a bipolar transistor (BJT) 162 is used to discharge via its collector the capacitor Cs when the low BJT Tb is active, which condition is sensed by connecting the base of the transistor 162 to the BJT Tb via a resistor 164, while the emitter of the transistor 162 is connected to ground.

In this embodiment, a part of the charge coming from the diac D during the ignition phase may flow through the BJT 162 if the voltage Vbe across Tb is sufficient to ignite the BJT.

In the embodiment of figure 5 , the bipolar transistor (BJT) 162 is again used to discharge via its collector the capacitor Cs, as disclosed in WO2010/006644.

In that case, the base of the transistor 162 is connected via the resistor 164 to ground, while the emitter of the transistor 162 is connected to the base of Tb. The transistor 162 will thus be activated when the Vbe voltage across Tb is negative, so that the transistor 162 will have no influence on the first ignition of the half-bridge.

The main advantages of the embodiments described herein can be summarized as follows.

Stand-by power consumption is reduced by changing some values of components, by introducing e.g. three simple SMD components as required to implement the charge amplifier 182. These components occupies less space and cost less than the components introduced in the arrangement disclosed in WO2009/115856. Also, an embodiment as shown e.g. in figure 5 introduces additional immunity and "sturdiness" of the whole device.

Experimental results demonstrate an improved behaviour of the whole ballast when the minimum rated load at the output is applied. In that situation, lower currents flow in the half-bridge thus reducing the gains of the power BJTs Ta and Tb. The arrangement described herein renders ignition of charge at half-bridge start-up particularly efficient, thus making it possible i.a. to reduce the minimum rated load since the charge amplifier block is able to improve the charge ignition in the power BJTs during the start-up phase.

It will thus be appreciated that, while devised primarily with the aim of reducing power absorption at standby by increasing the value of the loading resistor Rs, the arrangement described herein is in any way beneficial in rendering the charge ignition process in the power BJTs particularly efficient.

This also applies to those electronic transformers that do not include a standby feature as represented e.g. by the controllable switch Td. In fact, the charge amplifier of the arrangement described herein makes it possible to select for the components Rs and Cs values such as to reduce under 0.5 W the power consumption in those situations where the load L is simply removed.

Moreover, while the embodiments illustrated herein exploit the supply voltage 142 of the microcontroller 14, the presence of such a microcontroller for brightness adjustment (dimming) and stand-by control is not a mandatory feature.

Without prejudice to the underlying principles of the invention, the details and the embodiments may vary, even appreciably, with respect to what has been described by way of example only, without departing from the scope of the invention as defined by the annexed claims.

## Claims

1. A circuit for driving a load (L) from a mains signal and comprising:
- an ignition capacitor (Cs),
- an input stage (10) for loading said ignition capacitor (Cs) from said mains signal, and
- a switching output stage (12) for driving said load (L), said output stage (12) switcheable (Ta, Tb) as a function of the charge loaded on said ignition capacitor (Cs),
**characterized in that** the circuit includes an amplifier stage (18) interposed between said ignition capacitor (Cs) and said switching output stage (12) to amplify the charge loaded on said ignition capacitor (Cs).

2. The circuit of Claim 1, including a diac (D) coupled to said ignition capacitor (Cs), wherein said amplifier stage (18) is interposed between said diac (D) and said switching output stage (12).

3. The circuit of either of Claims 1 or 2, wherein said amplifier stage (18) includes a bipolar transistor (182) in an emitter-follower configuration.

4. The circuit of any of Claims 1 to 3, wherein said amplifier stage (18) is connected via a pull-up resistor (Rp) to a voltage supply (142) to draw charge therefrom.

5. The circuit of Claim 4, including a pull-up capacitor (Cp) in parallel with said pull-up resistor (Rp).

6. The circuit of any of Claims 1 to 5, wherein said amplifier stage (18) includes a bipolar transistor (182) with a resistor (Rbe) between base and emitter to avoid that the base of said transistor (182) may remain floating when said output stage (12) is not ignited by said ignition capacitor (Cs).

7. The circuit of any of Claims 1 to 6, wherein said ignition capacitor (Cs) has a capacitance value in the range of one nF.

8. The circuit of any of Claims 1 to 7, including:
- a loading resistor (Rs) coupled with said ignition capacitor (Cs) for loading said ignition capacitor (Cs) from said mains signal,
- a controllable (14) switch (Td) coupled with said ignition capacitor (Cs) to selectively short-circuit said ignition capacitor (Cs) and put said circuit at standby.

9. The circuit of Claim 8, wherein said loading resistor (Rs) has a resistance value in the range of one MOhm.

10. The circuit of any of Claims 1 to 9, including a stop circuit (16) to selectively keep said ignition capacitor (Cs) discharged to avoid unwanted re-ignitions of said switching output stage (12).

11. A method of driving a load (L) from a mains signal by means of a circuit including an ignition capacitor (Cs), the method including:
- loading (10) said ignition capacitor (Cs) from said mains signal, and
- driving said load (L) by means of a switching output stage (12) by switching said output stage (12) as a function of the charge loaded on said ignition capacitor (Cs),
**characterized in that** the method includes interposing a amplifier stage (18) between said ignition capacitor (Cs) and said switching output stage (12) to amplify the charge loaded on said ignition capacitor.

## Patentansprüche

1. Schaltung zum Treiben einer Last (L) von einem Netzsignal und umfassend:
- ein Zündkondensator (Cs),
- eine Eingangsstufe (10) zum Laden des Zündkondensators (Cs) von dem Netzsignal, und
- eine Schaltausgangsstufe (12) zum Treiben der Last (L), wobei die Ausgangsstufe (12) schaltbar ist (Ta, Tb) als eine Funktion der Ladung, die auf den Zündkondensator (Cs) geladen wird,
**dadurch gekennzeichnet, dass** die Schaltung eine Verstärkerstufe (18) beinhaltet, die zwischen den Zündkondensator (Cs) und die Schaltausgangsstufe (12) zwischengeschaltet ist, um die Ladung, die auf den Zündkondensator (Cs) geladen wird, zu verstärken.

2. Schaltung nach Anspruch 1, einschließlich eines Diacs (D), der an den Zündkondensator (Cs) gekoppelt ist, wobei die Verstärkerstufe (18) zwischen den Diac (D) und die Schaltausgangsstufe (12) zwischengeschaltet ist.

3. Schaltung nach Anspruch 1 oder 2, wobei die Verstärkerstufe (18) einen bipolaren Transistor (182) in einer Emitterfolger-Konfiguration beinhaltet.

4. Schaltung nach einem der Ansprüche 1 bis 3, wobei die Verstärkerstufe (18) über einen Pullup-Widerstand (Rp) mit einer Spannungsversorgung (142) verbunden ist, um Ladung von dieser zu ziehen.

5. Schaltung nach Anspruch 4, einschließlich eines Pullup-Kondensators (Cp), der parallel mit dem Pullup-Widerstand (Rp) geschaltet ist.

6. Schaltung nach einem der Ansprüche 1 bis 5, wobei die Verstärkerstufe (18) einen bipolaren Transistor (182) mit einem Widerstand (Rbe) zwischen Basis und Emitter beinhaltet, um zu verhindern, dass die Basis des Transistors (182) potentialfrei verbleiben kann, wenn die Ausgangsstufe (12) des Zündkondensators (Cs) nicht gezündet wird.

7. Schaltung nach einem der Ansprüche 1 bis 6, wobei der Zündkondensator (Cs) einen Kapazitätswert in dem Bereich eines Nanofarads aufweist.

8. Schaltung nach einem der Ansprüche 1 bis 7, beinhaltend:
- einen Ladewiderstand (Rs), der an den Zündkondensator (Cs) gekoppelt ist, um den Zündkondensator (Cs) von dem Netzsignal zu laden,
- ein steuerbarer (14) Schalter (Td), der an den Zündkondensator (Cs) gekoppelt ist, um den Zündkondensator (Cs) wahlweise kurzzuschließen und die Schaltung in Bereitschaft zu stellen.

9. Schaltung nach Anspruch 8, wobei der Ladewiderstand (Rs) einen Widerstandswert in dem Bereich eines MOhms aufweist.

10. Schaltung nach einem der Ansprüche 1 bis 9, einschließlich einer Stoppschaltung (16), um den Zündkondensator (Cs) wahlweise entladen zu halten, um ungewollte Widerzündungen der Schaltausgangsstufe (12) zu verhindern.

11. Verfahren zum Treiben einer Last (L), von einem Netzsignal mittels einer Schaltung, die einen Zündkondensator (Cs) beinhaltet, das Verfahren umfassend:
- Laden (10) des Zündkondensators (Cs) von dem Netzsignal, und
- Treiben der Last (L) mittels einer Schaltausgangsstufe (12) durch Schaltung der Ausgangsstufe (12) als eine Funktion der Ladung, die auf den Zündkondensator (Cs) geladen wurde,
**dadurch gekennzeichnet, dass** das Verfahren ein Zwischenschalten einer Verstärkerstufe (18) zwischen den Zündkondensator (Cs) und die Schaltausgangsstufe (12) beinhaltet, um die Ladung, die auf den Zündkondensator geladen wird, zu verstärken.

## Revendications

1. Circuit de pilotage d'une charge (L) à partir d'un signal secteur et comprenant :
- un condensateur d'allumage (Cs),
- un étage d'entrée (10) destiné à charger ledit condensateur d'allumage (Cs) à partir dudit signal secteur, et
- un étage de sortie de commutation (12) pour piloter ladite charge (L), ledit étage de sortie (12) étant commutable (Ta, Tb) en fonction de la charge chargée sur ledit condensateur d'allumage (Cs),
**caractérisé en ce que** le circuit inclut un étage amplificateur (18) interposé entre ledit condensateur d'allumage (Cs) et ledit étage de sortie de commutation (12) pour amplifier la charge chargée sur ledit condensateur d'allumage (Cs).

2. Circuit selon la revendication 1, incluant un diac (D) couplé audit condensateur d'allumage (Cs), dans lequel ledit étage amplificateur (18) est interposé entre ledit diac (D) et ledit étage de sortie de commutation (12).

3. Circuit selon l'une quelconque des revendications 1 ou 2, dans lequel ledit étage amplificateur (18) inclut un transistor bipolaire (182) dans une configuration en émetteur suiveur.

4. Circuit selon l'une quelconque des revendications 1 à 3, dans lequel ledit étage amplificateur (18) est relié via une résistance (Rp) à une tension d'alimentation (142) pour en tirer une charge.

5. Circuit selon la revendication 4, incluant un condensateur d'excursion haute (Cp) en parallèle avec ladite résistance d'excursion haute (Rp).

6. Circuit selon l'une quelconque des revendications 1 à 5, dans lequel ledit étage amplificateur (18) inclut un transistor bipolaire (182) avec une résistance (Rbe) entre base et émetteur pour éviter que la base dudit transistor (182) ne reste flottante lorsque ledit étage de sortie (12) n'est pas allumé par ledit condensateur d'allumage (Cs).

7. Circuit selon l'une quelconque des revendications 1 à 6, dans lequel ledit condensateur d'allumage (Cs) a une valeur de capacité dans la plage d'un nF.

8. Circuit selon l'une quelconque des revendications 1 à 7, incluant :
- une résistance de charge (Rs) couplée audit condensateur d'allumage (Cs) pour charger ledit condensateur d'allumage (Cs) à partir dudit signal secteur,
- un commutateur (Td) commandable (14) couplé audit condensateur d'allumage (Cs) pour court-circuiter sélectivement ledit condensateur d'allumage (Cs) et placer ledit circuit en veille.

9. Circuit selon la revendication 8, dans lequel ladite résistance de charge (Rs) a une valeur de résistance dans la plage d'un MOhm.

10. Circuit selon l'une quelconque des revendications 1 à 9, incluant un circuit d'arrêt (16) pour maintenir sélectivement ledit condensateur d'allumage (Cs) déchargé pour éviter des réallumages indésirables dudit étage de sortie de commutation (12).

11. Procédé de pilotage d'une charge (L) à partir d'un signal secteur au moyen d'un circuit incluant un condensateur d'allumage (Cs), le procédé incluant :
- la charge (10) dudit condensateur d'allumage (Cs) à partir dudit signal secteur, et
- le pilotage de ladite charge (L) au moyen d'un étage de sortie de commutation (12) par commutation dudit étage de sortie (12) en fonction de la charge chargée sur ledit condensateur d'allumage (Cs),
**caractérisé en ce que** le procédé inclut l'interposition d'un étage amplificateur (18) entre ledit condensateur d'allumage (Cs) et ledit étage de sortie de commutation (12) pour amplifier la charge chargée sur ledit condensateur d'allumage.
